# EUROPEAN PATENT APPLICATION

(11) **EP 4 124 986 A1**
(43) Date of publication of application: **01.02.2023**
(21) Application number: 21382698.5
(22) Date of filing: 27.07.2021
(51) Int. Cl.: G06F 30/15, G06F 30/23, G06F 119/14

(54) **METHOD FOR CALCULATING THE STRUCTURAL STIFFNESS OF AIRCRAFT COMPONENTS**

(71) Applicant: Airbus Operations, S.L.U., 28906 Getafe (Madrid) (ES)
(72) Inventor: LLAMAS SANDIN, Raul, Carlos, 28906 GETAFE (Madrid) (ES); BAILEY NOVAL, Nicolas, 28906 GETAFE (Madrid) (ES)
(74) Representative: Herrero & Asociados, S.L.

(57) **Abstract**

The method for calculating the structural stiffness of aircraft components comprises the following steps: defining a component by regions in a 2D mesh; extruding the 2D mesh defining an extruded section; clamping the extruded section on one side and applying loads to the other side; and solving a model with the displacements obtained by the application of the loads, defining stiffness properties.

## Description

The present invention refers to a method for calculating the structural stiffness of aircraft components, in particular, it refers to a method for calculating the beam stiffness properties of generic inhomogeneous structural sections of an aircraft.

### Background of the invention

In the conceptual design phases of an aircraft, the physical properties of the aircraft are usually split by components and represented with simplified models.

One of these properties is the structural stiffness, that is important to define how the components will deform under loads and understand if the designed components will support the stress requirements.

Aircrafts are composed of slender bodies, meaning that one of their dimensions is bigger than the other two in the 3D space.

This allows a simplistic representation of the structural components by a beam with different stiffness properties along its length.

The usual methodology to retrieve the stiffness properties is to build a 3D global FEM (finite element method) and retrieve the deformations induced by some input loads.

Generating 3D global FEM strongly depends on the geometry of the components, and discrete FEM topology modification can appear, being very hard to manage and requiring significant manual modifications.

This methodology is useless for optimization process where an automatic update of the model is required.

### Description of the invention

Therefore, one purpose of the present invention is to provide a method for estimating the structural stiffness of aircraft components in a simple and accurate way.

With the method according to the present invention it is possible to solve said drawbacks, providing other advantages that are described below.

The method for calculating the structural stiffness of aircraft components according to the present invention comprises the following steps:
- defining a component by regions in a 2D mesh;
- extruding the 2D mesh defining an extruded section;
- clamping the extruded section on one side and applying loads to the other side;
- solving a model with the displacements obtained by the application of the loads, defining stiffness properties.

Advantageously, in the 2D mesh, areas of each region are defined with 2D elements, frontiers of each region are defined with lines, and vertexes of each region are defined with points.

Furthermore, after the extrusion of the 2D mesh the areas are transformed into 3D elements, the lines are transformed into 2D elements, and the points are transformed into lines.

According to a preferred embodiment, the loads applied to the extruded section are unitary forces in each direction and unitary moments in each direction.

The method for calculating the structural stiffness of aircraft components according to the present invention can also comprise the step of exporting the stiffness properties after the model is solved, the step of creating a catalogue of properties, changing the input geometry with parameters, the step of building a response surface according to the stiffness properties, and/or the step of assigning properties that represent material properties to the regions of the 2D mesh.

The method according to the present invention does not depend on any 3D model, but requires just a 2D structural definition, such as the 2D mesh.

This 2D structural definition enables the assessment of global aircraft stiffness properties for dynamic analysis in very early concept phases and it can be used totally automated by its own, and it can be executed in a massively parallel process to build response surfaces.

This allows to work accurately with manufactured and deformed shapes, understand stiffness impacts on aerodynamic performance, and have an accurate calculation on stress requirements on the structure.

### Description of a preferred embodiment

The method for calculating the structural stiffness of aircraft components according to the present invention is used, in particular, for calculating the beam stiffness properties of generic inhomogeneous structural sections of an aircraft.

In the method according to the present invention, firstly the structural assembly of the component is defined in 2D by regions.

These regions have their frontiers that are connected to the geometry or to other regions. The regions can be defined by absolute positions or relative to chord (X coordinate) or thickness (Y coordinate) to be able to cope with different geometries.

In each region, its area can be defined by 2D elements, the frontiers with 1D elements, and the vertexes with point elements, each of them having assigned properties that will represent the material properties.

All these regions define a 2D mesh that is extruded defining an extruded section.

After the extrusion, point elements would then be 1D elements, 1D elements will now be 2D elements, 2D elements will be solid 3D elements.

One side of the extruded section is clamped, and on the other side of the extruded section, a plurality of loads (e.g. six) are applied, defining a model. The loads are unitary forces in each direction and unitary moments in each direction.

The model is solved and with the displacements, the stiffness properties of the section are obtained and exported, building a response surface.

In order to ease design space exploration, a catalogue of properties can be made, changing the input geometry with some parameters, and from there the response surface can be built.

This one provides instantly the stiffness properties of the section, just depending on the geometry of it.

Even though reference has been made to a specific embodiment of the invention, it is obvious for a person skilled in the art that the method described herein is susceptible to numerous variations and modifications, and that all of the details mentioned can be substituted for other technically equivalent ones without departing from the scope of protection defined by the attached claims.

## Claims

1. Method for calculating the structural stiffness of aircraft components, **characterized in that** it comprises the following steps:
- defining a component by regions in a 2D mesh;
- extruding the 2D mesh defining an extruded section;
- clamping the extruded section on one side and applying loads to the other side;
- solving a model with the displacements obtained by the application of the loads, defining stiffness properties.

2. Method for calculating the structural stiffness of aircraft components according to claim 1, wherein in the 2D mesh:
- areas of each region are defined with 2D elements;
- frontiers of each region are defined with lines;
- vertexes of each region are defined with points.

3. Method for calculating the structural stiffness of aircraft components according to claim 2, wherein after the extrusion of the 2D mesh:
- the areas are transformed into 3D elements;
- the lines are transformed into 2D elements;
- the points are transformed into lines.

4. Method for calculating the structural stiffness of aircraft components according to claim 1, wherein the loads applied to the extruded section are unitary forces in each direction and unitary moments in each direction.

5. Method for calculating the structural stiffness of aircraft components according to anyone of the previous claims, wherein it also comprises the step of exporting the stiffness properties after the model is solved.

6. Method for calculating the structural stiffness of aircraft components according to anyone of the previous claims, wherein it also comprises the step of creating a catalogue of properties, changing the input geometry with parameters.

7. Method for calculating the structural stiffness of aircraft components according to anyone of the previous claims, wherein it also comprises the step of building a response surface according to the stiffness properties.

8. Method for calculating the structural stiffness of aircraft components according to anyone of the previous claims, wherein it also comprises the step of assigning properties that represent material properties to the regions of the 2D mesh.
